# EUROPEAN PATENT APPLICATION

(11) **EP 4 481 624 A1**
(43) Date of publication of application: **25.12.2024**
(21) Application number: 23181257.9
(22) Date of filing: 23.06.2023
(51) Int. Cl.: G06N 3/042, G06N 5/02, G06V 30/10

(54) **DEVICE AND COMPUTER-IMPLEMENTED METHOD FOR MACHINE LEARNING**

(71) Applicant: Robert Bosch GmbH, 70442 Stuttgart (DE)
(72) Inventor: Higuera, Nelson, 1050 Wien (AT); Oetsch, Johannes, 1190 Wien (AT); Eiter, Thomas, 1040 Wien (AT)

(57) **Abstract**

Device and computer-implemented method for machine learning wherein the method comprises providing an input (404), in particular a digital image or a symbolic description of a graph, wherein the input (404) comprises a first node, a first name, a second node, and a second name, wherein the input (404) comprises an edge between the first node and the second node, wherein the method comprises determining, with a first model (408), depending on the input (404), an expression (410) that associates the edge with the first node and the second node, wherein the first model (408) is configured to recognize that the edge is between the first node and the second node, wherein the first model (408) is configured to determine the expression (410) that associates the edge with the first node and the second node depending on the input (404), determining with a second model (412), depending on the input (404), an expression (414) that associates the first node with the first name and an expression (414) that associates the second node with the second name, wherein the second model (412) is configured to recognize the first name and that the first name is associated to the first node, wherein the second model is configured to recognize the second name and that the second name is associated with the second node, wherein the second model is configured to determine the expression (414) that associates the first node with the first name and the expression (414) that associates the second node with the second name depending on the input (404), wherein the method comprises providing a question (406) that comprises the first name and the second name, determining, with a third model (416), depending on the question (406) an expression (418) that comprises the first name and the second name, wherein the third model (416) is configured to recognize the first name and the second name in the question (406) and to determine the expression (418) that comprises the first name and the second name depending on the question (406), and wherein the method comprises determining an answer (402) to the question (406) depending on the expressions.

## Description

### Background

The invention relates to a device and computer-implemented method for machine learning.

Visual or symbolic representations of structures that are based on graphs are a popular form of presenting information and ubiquitous in real life and on the internet.

### Disclosure of the invention

The device and the computer-implemented method for machine learning provide visual graph question answering, where the input is a digital image or a symbolic description of a graph along with a natural language question and the task is to correctly answer the question for the given input.

The computer-implemented method for machine learning comprises providing an input, in particular a digital image or a symbolic description of a graph, wherein the input comprises a first node, a first name, a second node, and a second name, wherein the input comprises an edge between the first node and the second node, wherein the method comprises determining, with a first model, depending on the input, an expression that associates the edge with the first node and the second node, wherein the first model is configured to recognize that the edge is between the first node and the second node, wherein the first model is configured to determine the expression that associates the edge with the first node and the second node depending on the input, determining with a second model, depending on the input, an expression that associates the first node with the first name and an expression that associates the second node with the second name, wherein the second model is configured to recognize the first name and that the first name is associated to the first node, wherein the second model is configured to recognize the second name and that the second name is associated with the second node, wherein the second model is configured to determine the expression that associates the first node with the first name and the expression that associates the second node with the second name depending on the input, wherein the method comprises providing a question that comprises the first name and the second name, determining, with a third model, depending on the question an expression that comprises the first name and the second name, wherein the third model is configured to recognize the first name and the second name in the question and to determine the expression that comprises the first name and the second name depending on the question, and wherein the method comprises determining an answer to the question depending on the expressions. The nodes and the edge represent a part of a graph. The graph is determined by the computer-implemented method for machine learning. The answer to the question is determined by the computer-implemented method for machine learning based on the content of the graph.

According to an example, the method comprises receiving the input from a sensor or at an interface, wherein the input represents an electrical circuit, wherein the edge represents an electrical connection between a first electrical component that is represented by the first node, and second electrical component that is represented by the second node, wherein the question relates to a state of the electrical circuit, the state of the first electrical component, the second electrical component or the electrical connection, wherein the answer comprises the state, and wherein the method comprises outputting the state or automatically approving or sorting out the electrical circuit depending on the state. The computer-implemented method for machine learning may be part of an inspection for manufacturing electrical connections.

According to an example, the method comprises receiving the input from a sensor or at an interface, wherein the input represents a map, wherein the edge represents a connection between a first waypoint that is represented by the first node, and second waypoint that is represented by the second node, wherein the question relates to the connection or a connection in the map that comprises the first waypoint, the second waypoint and/or the connection between the first waypoint and the second waypoint, wherein the method comprises selecting the connection for moving a technical system depending on the answer, and moving the technical system via the connection. The map may be a metro-map or a map of a facility. The technical system may be a physical system, for example a robot, in particular a vehicle or a manufacturing machine. The computer-implemented method for machine learning may assist moving the technical system automatically from one waypoint to another waypoint in the map or moving parts automatically from one waypoint to another waypoint in the map.

According to an example, the first model is configured for a semantic segmentation of the digital image and to recognize that the edge is between the first node and the second node depending on a result of the semantic segmentation. The semantic segmentation assigns pixels of the digital image a class, e.g., node, edge, or other. The part of the graph may be determined by the computer-implemented method from the coordinates and classes of the pixels of the digital image.

According to an example, the first model is configured to determine a matrix that comprises a row for the first node and a column for the second node an indicates the existence of the edge between the first node and the second node by an entry in an element of the matrix that is in the row and the column, wherein the method comprises determining the matrix and determining the expression that associates the edge with the first node and the second node depending on the matrix. The entry in the matrix is determined by the computer-implemented method, in particular from the coordinates and classes of the pixels of the digital image.

According to an example, the second model is configured for an optical character recognition in the digital image and to determine the first name and the second name depending on a result of the optical character recognition. The first name and the second name are determined by the computer-implemented method from the digital image.

According to an example, the first model is configured to determine a position, in particular pixel coordinates, of the first node in the digital image, wherein the second model is configured to determine a position, in particular pixel coordinates, of the first name in the digital image, wherein the method comprises determining the positions and determining the expression that associates the first node with the first name depending on the positions.

According to an example, the third model is configured to determine the first name in the question depending on a position of a first variable in a template for the question, and to determine the second name in the question depending on a position of a second variable in the template for the question, wherein the method comprises determining the expression that comprises the first name and the second name depending on the template. The question is an instance of the template in which the variables are replaced with the names.

According to an example, the method comprises determining answer-set programming facts depending on the expressions, and determining the answer depending on the answer-set programming facts. The expressions present a combinatorial problem. The computer-implemented method may use answer-set programming to reason about the question and to determine the answer that solves the combinatorial problem.

The device for machine learning comprises at least one processor and at least one memory, wherein the at least one processor is configured to execute instructions that, when executed by the at least one processor, cause the device to execute the method, wherein the at least one memory is configured to store the instructions.

A computer program that comprises computer executable instructions that, when executed by a computer, cause the computer to execute the method, has the advantages that the method provides.

Further embodiments are derived from the following description and the drawing. In the drawing:
- Fig. 1: schematically depicts a device for machine learning,
- Fig. 2: depicts an exemplary input,
- Fig. 3: depicts a functional representation of an exemplary question,
- Fig. 4: depicts an architecture for machine learning,
- Fig. 5: depicts a flowchart with steps of a computer-implemented method for machine learning.

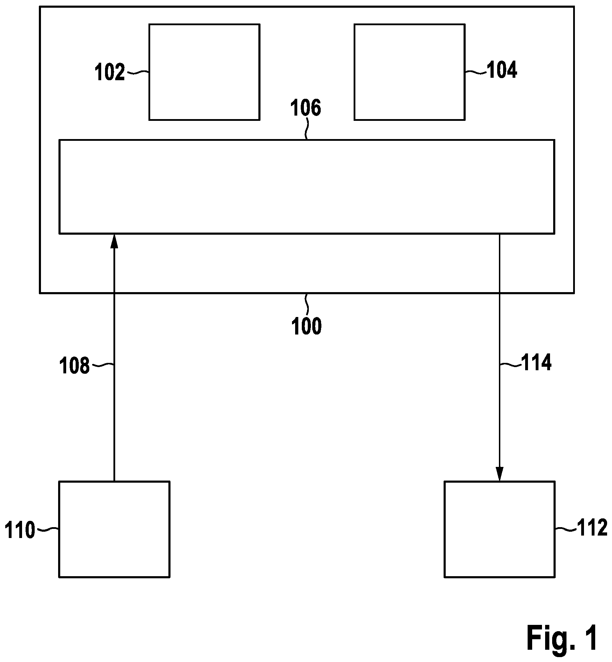

Figure 1 schematically depicts a device 100 for machine learning. The device 100 comprises at least one processor 102 and at least one memory 104.

The device 100 may comprise an interface 106. The interface 106 may be configured to receive an input 108. The input 108 may be a digital image or a symbolic description of a graph.

The device 100 is configured to answer a question. The question may be a natural language question.

The input 106 may be configured to receive the input 108 from a sensor 110. The sensor 110 may be configured to capture the input 108. The sensor 110 may be a camera.

The device 100 may be configured to actuate a technical system 112. The technical system 112 may be a robot, in particular a vehicle or a manufacturing machine. The device 100 may configured to output an output 114 to actuate a technical system 112. The interface 106 may be configured to output the output 114.

The input 108 may represents an electrical circuit.

The graph may represent the electrical circuit. The graph may comprise nodes that represent electrical components. The graph may comprise edges that represent electrical connections between electrical components. An edge of the graph may represent an electrical connection between an electrical component that is represented by a first node of the graph and second electrical component that is represented by a second node of the graph.

The question may relate to a state of the electrical circuit. The question may relate to a state of the first electrical component. The question may relate to a state of the second electrical component. The question may relate to a state of the electrical connection.

The answer may comprise the state.

The device 100 may be configured to output the state. The output 114 may comprise the state.

The device 100 or the technical system 114 may be configured to automatically approve or sort out the electrical circuit depending on the state. The device 100 may be configured to actuate the manufacturing machine to sort out the electrical circuit in case the state indicates a faulty electrical circuit, electrical connection or electrical component. The device 100 may be configured to actuate the manufacturing machine to approve the electrical circuit in case the state indicates that the electrical circuit, the electrical connection and/or the electrical component is approved.

The input 108 may represent a map.

The graph may represent the map. The graph may comprise nodes that represent waypoints. The graph may comprise edges that represent connections between waypoints. An edge of the graph may represent a connection between a first waypoint that is represented by the first node of the graph and second waypoint that is represented by the second node of the graph.

The question may relate to the connection. The question may relate to another connection in the map. The other connection may comprise the first waypoint. The other connection may comprise the second waypoint. The other connection may comprise the connection between the first waypoint and the second waypoint.

The device 100 may be configured to select the connection for moving a technical system 112 depending on the answer, and moving the technical system 112 via the connection. The output 114 may comprise the selected connection or instruction that result in moving the technical system 112 via the connection.

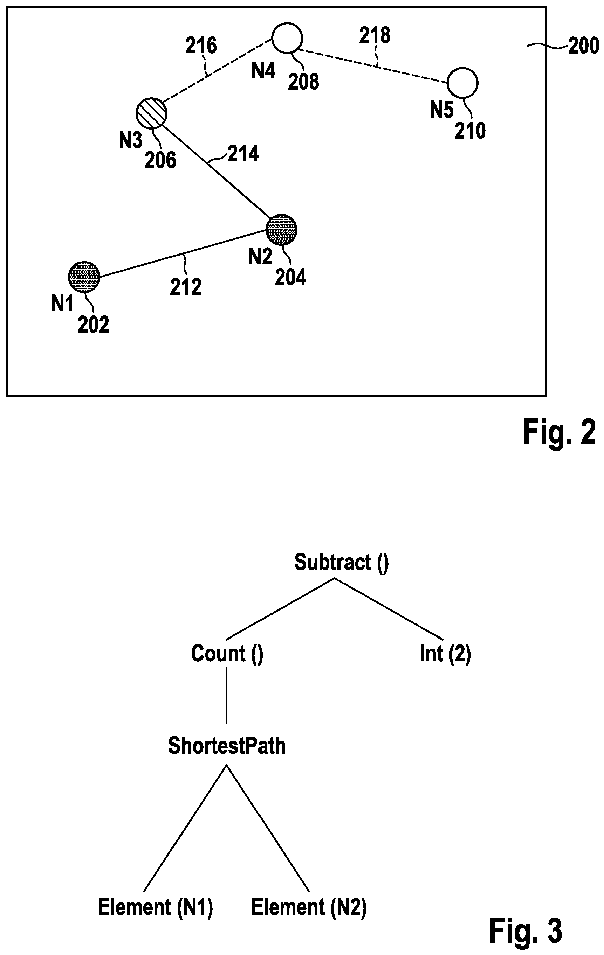

Figure 2 depicts an exemplary input 108. The exemplary input comprises a digital image 200.

The digital image 200 depicts a first element 202 next to characters N1, a second element 204 next to characters N2, a third element 206 next to characters N3, a fourth element 208 next to characters N4, and a fifth element 210 next to characters N5. The digital image 200 may depict more or less elements. The elements may be depicted next to more or less characters.

The digital image 200 depicts a first connection 212 between the first element 202 and the second element 204. The digital image 200 depicts a second connection 214 between the second element 204 and the third element 206. The digital image 200 depicts a third connection 216 between the third element 206 and the fourth element 208. The digital image 200 depicts a fourth connection 218 between the fourth element 208 and the fifth element 210.

The digital image 200 may comprise different types of connections and elements.

According to the example, the digital image 200 comprises two different types of connections and three different types of elements. A first group of elements comprises the first element 202, the second element 204, and the third element 206. A second group of elements comprises the third element 206, the fourth element 208, and the fifth element 210. According to the example, the first element 202 and the second element 204 are of a first type, the fourth element and the fifth element 210 are of a second type, and the third element 206 is of a third type.

The different groups may comprise different types of connections. According to the example, the first connection 212 and the second connection 214 are of a first type of connection. According to the example, the third connection 216 and the fourth connection 218 are of a second type of connection.

According to the example, the connection between two elements of the first type is of the first type. According to the example, the connection between two elements of the second type is of the second type. According to the example, the connection between an element of the first type and an element of the third type is of the first type. According to the example, the connection between an element of the second type and an element of the third type is of the second type.

The graph may comprise nodes that represent the elements and edges that represent the connections. According to the example, the graph comprises a first node that represent the first element 202, a second node that represents the second element 204, and a third node that represents the third element 206, a fourth node that represents the fourth element 208, and a fifth node that represents the fifth element 210. According to the example, the graph comprises a first edge that represent the first connection 212, a second edge that represents the second connection 214, and a third edge that represents the third connection 216, and a fourth edge that represents the fourth connection 218.

The elements may be waypoints. The elements may be electrical components.

Figure 3 depicts a functional representation of an exemplary question "How many elements are between N1 and N5". In the functional representation
Subtract () is a function for determining a difference between inputs to the function Subtract (),
Count () is a function for determining a number of elements between inputs to the function Count (),
Int (2) is a function to provide a value 2,
Element (N1) is a function to output a value N1,
Element (N1) is a function to output a value N2.

N1 and N5 are names of elements in the digital image 200.

The exemplary question is based on a template:
"How many elements are between [Element 1] and [Element 2]"

The template comprises a first variable [Element 1] and a second variable [Element 2]. The first variable is a placeholder for a first name in the question. The second variable is a placeholder for a second name in the question. The order in which the names appear in the question may correspond to the order of inserting the variables in the functional representation.

The functional representation may be based on a template, that comprises the functions Subtract (), Count (), Int(), ShortestPathQ as described above, the first variable name Element 1 instead of the name N1 in the first appearance of the function Element (Element 1) and the second variable name Element 2 instead of the name N5 in the second appearance of the function Element (Element 2).

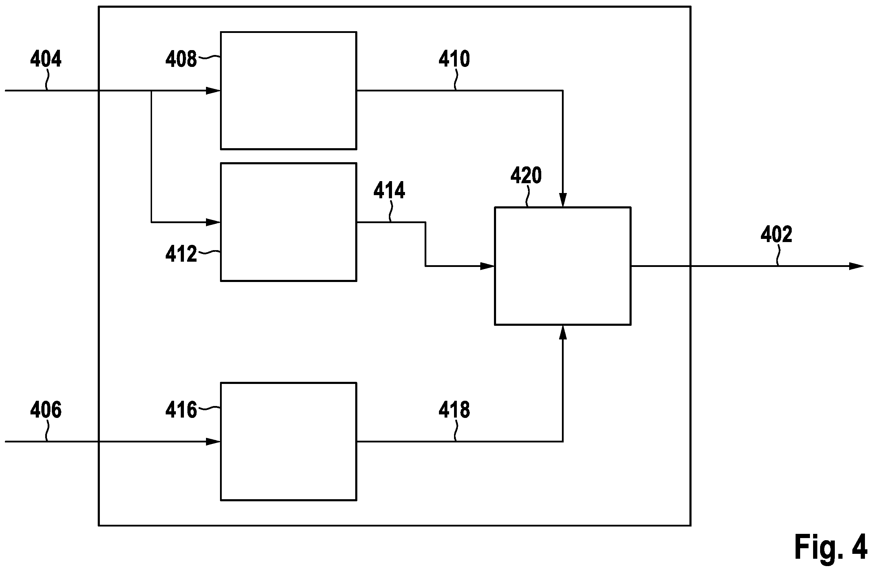

Figure 4 depicts an architecture 400 for machine learning. The architecture 400 is configured to determine an answer 402 depending on a first input 404, e.g., a digital image or symbolic description of a graph, and a second input 406, e.g., the question. The answer 402 is for example an answer set.

The architecture 400 comprises a first model 408. The first model 408 is configured to recognize edges between nodes and to determine expressions 410 that associate edges with nodes depending on the first input 404.

The architecture 400 comprises a second model 412. The second model 412 is configured to recognize names and associations between names and nodes depending on the first input 404.

The second model 412 is configured to determine expressions 414 that associate the nodes with the names depending on the first input 404.

The architecture 400 comprises a third model 416. The third model 416 is configured to recognize names in the second input 406 and to determine expressions 418 that comprise the names depending on the second input 406

The architecture 400 comprises a module 420. The module 420 is configured to determine the answer 402 depending on the expressions that the first model 408, the second model 412 and the third model 416 output.

The device 100 is for example configured according to the architecture 400.

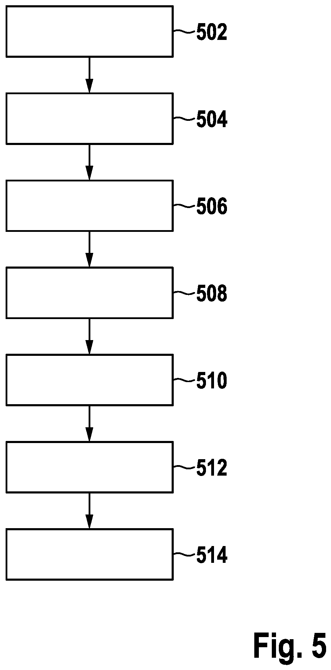

Figure 5 depicts a flowchart with steps of a computer-implemented method for machine learning. The method is explained with reference to the architecture 400.

The method comprises a step 502.

In the step 502, an input 404 is provided.

The method may comprise receiving the input 404 from the sensor 110 or at the interface 106.

The input 404 in the example is a digital image of a graph. The input 404 may be a symbolic description of a graph.

The input 404 comprises a first node, a first name, a second node, and a second name.

The input 404 may comprise more nodes and names. An example for the input 404 is the digital image 200.

The input 404 comprises an edge between the first node and the second node. The input 404 comprise a first name and a second name.

An example for the edge is the connection 212 between the first element 202 and the second element 204. An example for the first node is the first element 202. An example for the second node is the second element 204. An example for the first name is N1. An example for the second name is N2.

The method comprises a step 504.

In the step 504 the question 406 that comprises the first name and the second name is provided.

The method comprises a step 506.

In step 506 the expression 410 that associates the edge with the first node and the second node is determined with the first model 408 depending on the input 404.

The first model 408 may be configured for a semantic segmentation of the first input 404, in particular the digital image, and to recognize that the edge is between the first node and the second node depending on a result of the semantic segmentation.

The first model 408 may be configured to determine a matrix that comprises a row for the first node and a column for the second node an indicates the existence of the edge between the first node and the second node by an entry in an element of the matrix that is in the row and the column.

The method may comprise determining the matrix and determining the expression 410 that associates the edge with the first node and the second node depending on the matrix.

The first model 408 may be configured to determine a position, in particular pixel coordinates, of the first node in the input 404, e.g., the digital image.

The first model 408 may be configured to determine a position, in particular pixel coordinates, of the second node in the input 404, e.g., the digital image.

The first model 408 comprises for example an artificial neural network that is configured to map the input 404 to the expression 410 and/or the positions.

The method comprises a step 508.

In the step 508 the expression 414 that associates the first node with the first name and an expression 414 that associates the second node with the second name is determined with the second model 412 depending on the input 404.

The second model 412 may be configured for an optical character recognition in the digital image and to determine the first name and the second name depending on a result of the optical character recognition.

The method may comprise determining the first name and the second name with the optical character recognition.

The method may comprise determining the expression 414 that associates the first node with the first name and the second node with the second name depending on their respective positions in the input 404.

The second model 412 may be configured to determine a position, in particular pixel coordinates, of the first name in the input 404, e.g., the digital image.

The step 508 may comprise determining the positions and determining the expression that associates the first node with the first name depending on the positions.

The method comprises a step 510.

The step 510 comprises determining the expression 418 that comprises the first name and the second name with the third model 416, depending on the question 406.

The third model 416 may be configured to determine the first name in the question 406 depending on a position of a first variable in the template for the question 406.

The third model 416 may be configured to determine the second name in the question 406 depending on a position of a second variable in the template for the question 406.

The step 510 may comprise determining the expression 418 that comprises the first name and the second name depending on the template.

The method comprises a step 512.

The step 512 comprises determining the answer 402 to the question 406 depending on the expression 410 that the first model 408 outputs for the input 404, the expression 414 that the second model 410 outputs for the input 404 and the expression 418 that the third model 416 outputs for the question 406.

The step 512 may comprise determining answer-set programming facts depending on the expressions that the first model 408, the second model 412 and the third model 416 provide, and determine the answer 402 depending on the answer-set programming facts.

The method may comprise a step 514.

The input 404 may represent an electrical circuit. The edge may represent an electrical connection between a first electrical component that is represented by the first node, and second electrical component that is represented by the second node.

The question 406 may relate to a state of the electrical circuit, the state of the first electrical component, the second electrical component or the electrical connection.

The answer 402 may comprise the state.

The step 514 may comprise outputting the state or automatically approving or sorting out the electrical circuit depending on the state, in particular with the technical system 112. This means, the technical system 112 may be operating according to the output 114 to approve or sort out the electrical circuit depending on the state. The output 114 may be the state or a signal that is determined depending on the state in order to operate the technical system 112 according to the state.

The input 404 may represent a map. The edge may represent a connection between a first waypoint that is represented by the first node, and second waypoint that is represented by the second node. The question may relate to the connection or a connection in the map that comprises the first waypoint, the second waypoint and/or the connection between the first waypoint and the second waypoint.

The step 514 may comprise selecting the connection for moving a technical system depending on the answer 402, and moving the technical system 112 via the connection. The technical system 112 may be operated with the output 114.

The output 114 may be determined depending on the answer 402, e.g., to provide a trajectory or directly steering input to the technical system 112 to move from the first waypoint to the second waypoint.

The method is not limited to neighboring nodes. The method applies to nodes that are connected by a path in the graph as well. The method is not limited to two nodes. The method applies to paths that comprise more than two nodes as well.

The task that the method solves is for example, to answer natural language questions. The natural language questions may ask for the shortest path between two stations in a metro-map while avoiding stations that have a particular property.

For the natural language questions, the method may only consider those natural language questions that can be answered with information that can be found in the digital image that represents te metro-map. The method may disregard all other symbolic information from the digital image or the natural language question. The method parses the graph to identify nodes and edges, reads and understands the names that label the stations and associate them to the nodes of the graph, and understands the natural language question and reasons over the information extracted from the digital image to answer the natural language question.

The first model 408 may be configured for optical graph recognition, e.g., as described in C. Auer, C. Bachmaier, F. J. Brandenburg, A. Gleißner, J. Reislhuber, Optical graph recognition, in: Graph Drawing, Springer Berlin Heidelberg, Berlin, Heidelberg, 2013, pp. 529-540.

The second model 412 may be configured for optical character recognition as described in A. M. Sabu, A. S. Das, A survey on various optical character recognition techniques, in: 2018 Conference on Emerging Devices and Smart Systems (ICEDSS), 2018, pp. 152-155.

The third model 416 may be configured for determining a functional program that represents the natural language question with CLEGR templates, e.g., as described in D. Mack, A. Jefferson, CLEVR graph: A dataset for graph question answering, 2018. URL: https://github.com/Octavian-ai/clevr-graph.

The method may use answer-set programming, e.g., as described in G. Brewka, T. Eiter, M. Truszczynski, Answer set programming at a glance, Commun. ACM 54 (2011) 92-103.

The module 420 may comprise an Answer-set programming solver.

## Claims

1. Computer-implemented method for machine learning, **characterized in that** the method comprises providing (502) an input (404), in particular a digital image or a symbolic description of a graph, wherein the input (404) comprises a first node, a first name, a second node, and a second name, wherein the input (404) comprises an edge between the first node and the second node, wherein the method comprises determining (506), with a first model (408), depending on the input (404), an expression (410) that associates the edge with the first node and the second node, wherein the first model (408) is configured to recognize that the edge is between the first node and the second node, wherein the first model (408) is configured to determine the expression (410) that associates the edge with the first node and the second node depending on the input (404), determining (508) with a second model (412), depending on the input (404), an expression (414) that associates the first node with the first name and an expression (414) that associates the second node with the second name, wherein the second model (412) is configured to recognize the first name and that the first name is associated to the first node, wherein the second model is configured to recognize the second name and that the second name is associated with the second node, wherein the second model is configured to determine the expression (414) that associates the first node with the first name and the expression (414) that associates the second node with the second name depending on the input (404), wherein the method comprises providing (504) a question (406) that comprises the first name and the second name, determining (510), with a third model (416), depending on the question (406) an expression (418) that comprises the first name and the second name, wherein the third model (416) is configured to recognize the first name and the second name in the question (406) and to determine the expression (418) that comprises the first name and the second name depending on the question (406), and wherein the method comprises determining (512) an answer (402) to the question (406) depending on the expressions.

2. The method according to claim 1, **characterized in that** the method comprises receiving (502) the input (404) from a sensor (110) or at an interface (106), wherein the input (404) represents an electrical circuit, wherein the edge represents an electrical connection between a first electrical component that is represented by the first node, and second electrical component that is represented by the second node, wherein the question (406) relates to a state of the electrical circuit, the state of the first electrical component, the second electrical component or the electrical connection, wherein the answer comprises the state, and wherein the method comprises (514) outputting the state or automatically approving or sorting out the electrical circuit depending on the state.

3. The method according to claim 1, **characterized in that** the method comprises receiving (502) the input (404) from a sensor (110) or at an interface (106), wherein the input (404) represents a map, wherein the edge represents a connection between a first waypoint that is represented by the first node, and second waypoint that is represented by the second node, wherein the question relates to the connection or a connection in the map that comprises the first waypoint, the second waypoint and/or the connection between the first waypoint and the second waypoint, wherein the method comprises (514) selecting the connection for moving a technical system depending on the answer (402), and moving the technical system (112) via the connection.

4. The method according to one of the previous claims, **characterized in that** the first model (408) is configured for a semantic segmentation of the digital image and to recognize that the edge is between the first node and the second node depending on a result of the semantic segmentation.

5. The method according to one of the previous claims, **characterized in that** the first model (408) is configured to determine a matrix that comprises a row for the first node and a column for the second node an indicates the existence of the edge between the first node and the second node by an entry in an element of the matrix that is in the row and the column, wherein the method comprises (506) determining the matrix and determining the expression (410) that associates the edge with the first node and the second node depending on the matrix.

6. The method according to one of the previous claims, **characterized in that** the second model (412) is configured for an optical character recognition in the digital image and to determine the first name and the second name depending on a result of the optical character recognition.

7. The method according to one of the previous claims, **characterized in that** the first model (408) is configured to determine a position, in particular pixel coordinates, of the first node in the digital image, wherein the second model is configured to determine a position, in particular pixel coordinates, of the first name in the digital image, wherein the method comprises (506) determining the positions and determining the expression that associates the first node with the first name depending on the positions.

8. The method according to one of the previous claims, **characterized in that** the third model (416) is configured to determine the first name in the question depending on a position of a first variable in a template for the question, and to determine the second name in the question depending on a position of a second variable in the template for the question, wherein the method comprises determining (510) the expression that comprises the first name and the second name depending on the template.

9. The method according to one of the previous claims, **characterized in that** the method comprises (512) determining answer-set programming facts depending on the expressions, and determining the answer depending on the answer-set programming facts.

10. A device (100) for machine learning, **characterized in that** the device (100) comprises at least one processor (102) and at least one memory (104), wherein the at least one processor (102) is configured to execute instructions that, when executed by the at least one processor (102), cause the device (100) to execute the method according to one of the claims 1 to 8, wherein the at least one memory (104) is configured to store the instructions.

11. Computer program, **characterized in that** the computer program comprises computer executable instructions that, when executed by a computer, cause the computer to execute the method according to one of the claims 1 to 8.
